(19) Europäisches Patentamt
European Patent Office
Office européen des brevets

(11) **EP 3 411 955 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **17704418.7**

(22) Anmeldetag: **03.02.2017**

(51) Internationale Patentklassifikation (IPC):
*H04B 1/04* (2006.01)    *H04L 27/26* (2006.01)
*H04L 27/02* (2006.01)    *H04L 27/18* (2006.01)
*H04L 27/34* (2006.01)

(52) Gemeinsame Patentklassifikation (CPC):
**H04B 1/0475; H04L 27/2628;** H04B 2001/0491;
H04L 27/02; H04L 27/18; H04L 27/26265;
H04L 27/34

(86) Internationale Anmeldenummer:
**PCT/EP2017/052433**

(87) Internationale Veröffentlichungsnummer:
**WO 2017/134249 (10.08.2017 Gazette 2017/32)**

(54) **SCHALTUNGSANORDNUNG UND VERFAHREN ZUR ERZEUGUNG EINES HOCHFREQUENTEN, ANALOGEN SENDESIGNALS MIT VERRINGERTEN STÖRSIGNALEN**

CIRCUIT ARRANGEMENT AND METHOD FOR GENERATING A RADIO-FREQUENCY, ANALOGUE TRANSMISSION SIGNAL USING REDUCED INTERFERENCE SIGNALS

AGENCEMENT DE CIRCUITS ET PROCÉDÉ DE GÉNÉRATION D'UN SIGNAL D'ÉMISSION ANALOGIQUE À HAUTE FREQUENCE COMPORTANT DES SIGNAUX PARASITES RÉDUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2016 DE 102016102005**

(43) Veröffentlichungstag der Anmeldung:
**12.12.2018 Patentblatt 2018/50**

(73) Patentinhaber: **InCirT GmbH**
**52064 Aachen (DE)**

(72) Erfinder: **HANAY, Oner**
**52064 Aachen (DE)**

(74) Vertreter: **Kutzenberger Wolff & Partner**
**Waidmarkt 11**
**50676 Köln (DE)**

(56) Entgegenhaltungen:
**EP-A1- 2 333 994        US-A1- 2010 104 041**
**US-A1- 2011 228 878    US-A1- 2015 043 324**
**US-A1- 2015 303 953**

**Beschreibung**

**Stand der Technik**

Die vorliegende Erfindung betrifft eine Schaltungsanordnung zur Erzeugung eines hochfrequenten, analogen Sendesignals. Ein weiterer Gegenstand der Erfindung ist eine Sendeeinrichtung zum Senden eines hochfrequenten Sendesignals wobei die Sendeeinrichtung eine Antenne zum Senden des Sendesignals aufweist. Ferner betrifft die Erfindung ein Verfahren zum Senden eines hochfrequenten, analogen Sendesignals.

Eine Schaltungsanordnung zur Erzeugung eines hochfrequenten, analogen Sendesignals ist beispielsweise aus der US 2010/104041 A1 bekannt. Bei dieser Schaltungsanordnung wird eine inverse, diskrete Fouriertransformation durchgeführt, um ein digitales Signal zu erhalten, welches nachfolgend in ein hochfrequentes, analoges Sendesignal gewandelt wird. Weitere Schaltungsanordnungen zur Erzeugung hochfrequenter, analoger Sendesignale, welche eine inverse, diskrete Fouriertransformation nutzen, sind in EP 2 333 994 A1, US 2015/043324 A1 und US 2011/228878 A1 beschrieben.

Die US 2015/0 303 953 A1 beschreibt ein Verfahren zur elektronischen Kommunikation mit reduziertem Informationsverlust. Bei diesem Verfahren wird ein Signal in mehrere Segmente unterteilt und es wird redundante Information in Form von Signalelementen erzeugt. Zum Einbringen dieser Signalelemente in das Signal wird das Signal zunächst vom Zeitbereich in den Frequenzraum überführt. Die zusätzlichen Signalelemente werden im Frequenzraum in das Signal eingebracht und das derart modifizierte Signal wird aus dem Frequenzraum in den Zeitbereich transformiert.

In drahtlosen, digitalen Kommunikationssystemen werden zum Senden hochfrequenter, analoger Sendesignale oftmals als Transmitter bezeichnete Sendeeinrichtungen mit einem Radio Frequency Digital to Analog Converter (RF-DAC) verwendet, welche eine Kombination aus einem Digital-Analog-Converter und einem Mischer darstellen. Solchen RF-DACs wird in der Regel ein digitales Basisbandsignal zugeführt, welches durch den RF-DAC zunächst in ein analoges Signal gewandelt und dann auf eine vorgegebene Trägerfrequenz umgesetzt wird.

Bei derartigen Schaltungsanordnungen nach Art eines RF-DACs ist es erforderlich, das digitale Basisbandsignal vor der Digital-Analog-Wandlung zunächst überabzutasten und dann mit einem digitalen Tiefpassfilter zu filtern. Durch diese Maßnahmen können steile Pegeländerungen des Signals geglättet werden, so dass sich die Aussendung unerwünschter Störsignale verringert. Bei solchen Sendeeinrichtungen, die für digitale Kommunikationssysteme mit einer hohen Bandbreite ausgelegt werden sollen, ist der schaltungstechnische Aufwand zur Realisierung der Überabtastung und digitalen Filterung des Basisbandsignals allerdings sehr hoch, unter anderem weil die verwendeten Schaltungen mit hoher Schaltfrequenz betrieben werden müssen. Durch die hohe Schaltfrequenz der Schaltungen zur Prozessierung des Basisbandsignals können Glitches erzeugt werden, durch welche die Aussendung unerwünschter Störsignale gefördert wird. Somit können Störsignale beim Senden von Signalen mit hoher Bandbreite nur unzureichend unterdrückt werden. Auch der RF-DAC muss mit einer hohen Taktfrequenz arbeiten, um eine entsprechend hohe Sampling-Rate realisieren zu können. Hierdurch wird die Entstehung von Glitches zusätzlich gefördert.

**Offenbarung der Erfindung**

Vor diesem Hintergrund ist es Aufgabe der vorliegenden Erfindung, die Aussendung unerwünschter Störfrequenzen beim Senden von Signalen mit hoher Bandbreite zu verringern.

Zur Lösung der Aufgabe wird eine Schaltungsanordnung zum Erzeugen eines hochfrequenten, analogen Sendesignals vorgeschlagen, wobei die Schaltungsanordnung eine Synthesevorrichtung zur Erzeugung des hochfrequenten, analogen Sendesignals anhand eines diskreten Frequenzspektrums eines digitalen, insbesondere modulierten, Basisbandsignals aufweist, wobei die Synthesevorrichtung eine Vorrichtung zur Durchführung einer kontinuierlichen, inversen Fourier-Transformation ist. Mittels der Schaltungsanordnung kann ein Sendesignal für einen drahtgebundenen oder einen drahtlosen Übertragungskanal erzeugt werden.

Das hochfrequente, analoge Sendesignals ist insbesondere ein hochfrequentes, analoges Einzelträger-Sendesignal. Unter einem hochfrequenten, analogen Einzelträger-Sendesignal (engl. single carrier signal) wird ein Sendesignal verstanden, das genau eine Trägerfrequenz aufweist, auf welche die zu übertragende Information moduliert ist. Insofern weist das hochfrequente, analoge Einzelträger-Sendesignal keine Zwischenträger (engl. subcarrier) auf. Mit der erfindungsgemäßen Schaltungsanordnung kann eine Einzelträger-Datenübertragung über einen Übertragungskanal ermöglicht werden, wobei der Übertragungskanal genau eine Trägerfrequenz aufweist.

Gelöst wird die Aufgabe auch durch eine Sendeeinrichtung zum Senden eines hochfrequenten, analogen Sendesignals gemäß Patentanspruch 2.

Erfindungsgemäß wird der Synthesevorrichtung ein diskretes Frequenzspektrum eines Basisbandsignals bereitgestellt. Insofern liegt eine Darstellung des Basisbandsignals im Frequenzraum vor. Über die Synthesevorrichtung kann das Signal aus dem Frequenzraum in den Zeitbereich überführt werden, wobei eine Frequenzumsetzung derart durchführbar ist, dass anhand des diskreten Frequenzspektrums ein hochfrequentes, analoges Sendesignal erzeugt wird. Durch die Verwendung einer Synthesevorrichtung ist es nicht erforderlich, das digitale Basisbandsignal einer Überabtastung und/oder einer Filterung zu unterziehen, um Störaussendungen zu verringern. Die Schaltungsanordnung zum Erzeugen des hochfrequenten, analogen Sendesignals kann mit einer reduzierten Schaltfrequenz betrieben werden, wodurch sich das Auftreten von Glitches reduziert und die Aussendung unerwünschter Störsignale verringert werden kann.

Bei dem Basisbandsignal kann es sich um ein moduliertes, insbesondere digitales, Basisbandsignal handeln, wie es beispielsweise durch Modulation eines, insbesondere digitalen, Nutzdatenstroms erhalten werden kann. Durch die Modulation kann der Nutzdatenstrom in ein an den drahtlosen Übertragungskanal angepasstes Format gebracht werden. Das modulierte Basisbandsignal kann z. B. mittels einer der nachfolgend genannten digitalen Modulationsverfahren moduliert sein: Amplitude Shift Keying (ASK), Phase Shift Keying (PSK), Differential Phase Shift Keying (DPSK), Frequency Shift Keying (FSK), Quadrature Amplitude Modulation (QAM). Das digitale, insbesondere modulierte, Basisbandsignal ist bevorzugt ein komplexwertiges Basisbandsignal, d.h. es weist eine reelle Komponente auf, welche üblicherweise als I-Komponente oder In-Phase-Komponente bezeichnet wird, und eine imaginäre Komponente, welche üblicherweise als Q-Komponente oder Quadratur-Komponente bezeichnet wird.

Gemäß der Erfindung ist die Synthesevorrichtung eine Vorrichtung zur Durchführung einer kontinuierlichen, inversen Fourier-Transformation, so dass anhand des diskreten Frequenzspektrums unmittelbar ein analoges, insbesondere kontinuierliches, Sendesignal erzeugt werden kann. Auf eine herkömmliche, separate Schaltung zur Digital-Analog-Wandlung, beispielsweise einen Digital-Analog-Wandler, kann somit verzichtet werden. Vielmehr wird durch die Synthesevorrichtung eine Vorrichtung bereitgestellt, mittels welcher sowohl eine Überführung des im Frequenzraum vorliegenden digitalen Basisbandsignals in einen Sendefrequenzbereich als auch eine Digital-Analog-Wandlung durchführbar ist. Die Synthesevorrichtung erfüllt somit eine Doppelfunktion.

Bevorzugt weist das diskrete Frequenzspektrum mehrere Fourier-Koeffizienten auf, welche jeweils einer ersten Frequenz in einem Basisbandbereich zugeordnet sind, insbesondere wobei jeweils zwei erste Frequenzen einen vorgegebenen Frequenzabstand ($\Delta$f) aufweisen. Beispielsweise kann das Frequenzspektrum N Fourier-Koeffizienten aufweisen. Die N Fourier-Koeffizienten können als Maß für die Spektralleistung des Gleichanteils des digitalen Basisbandsignals sowie für die Spektralleistung von $N\text{-}1$ Basisbandfrequenzen des digitalen Basisbandsignals aufgefasst werden. Die $N\text{-}1$ Basisbandfrequenzen können jeweils einen Abstand von $\mathit{\Delta}f = BW'/N$ aufweisen, wobei $BW'$ die Bandbreite des digitalen Basisbandsignals angibt. Die Fourier-Koeffizienten sind insbesondere komplexwertig, d.h. sie weisen eine reelle und eine imaginäre Komponente auf.

Gemäß einer vorteilhaften Ausgestaltung kann die Sendeeinrichtung eine Analysevorrichtung zur Berechnung des diskreten Frequenzspektrums anhand des digitalen Basisbandsignals aufweisen. Über die Analysevorrichtung kann das digitale Basisbandsignal in ein diskretes Frequenzspektrum zerlegt werden. Insofern ist es möglich, das digitale Basisbandsignal mittels der Analysevorrichtung aus dem Zeitbereich in den Frequenzraum zu überführen. Die Analysevorrichtung ist bevorzugt als Vorrichtung zur Durchführung einer diskreten Fourier-Transformation des digitalen Basisbandsignals ausgebildet. Besonders bevorzugt ist die Analysevorrichtung eine Vorrichtung zur Durchführung einer schnellen Fourier-Transformation (engl. Fast Fourier Transform, FFT), wodurch eine in schaltungstechnischer Hinsicht effiziente Berechnung der diskreten Fourier-Transformation ermöglicht werden kann. Vorteilhaft ist eine Ausgestaltung bei welcher die Analyseeinrichtung als Vorrichtung zur Durchführung einer diskreten Fouriertransformation des digitalen Basisbandsignals ausgebildet ist und die Synthesevorrichtung als Vorrichtung zur Durchführung einer kontinuierlichen, inversen Fourier-Transformation ausgebildet ist. Besonders vorteilhaft ist es, wenn die Analyseeinrichtung als Vorrichtung zur Durchführung einer schnellen Fouriertransformation (FFT), insbesondere mit vorgegebener Länge, ausgebildet ist und die Synthesevorrichtung als Vorrichtung zur Durchführung einer kontinuierlichen, inversen Fourier-Transformation ausgebildet ist.

Gemäß einer alternativen vorteilhaften Ausgestaltung weist die Sendeeinrichtung eine Modulationsvorrichtung zur Erzeugung eines diskreten Frequenzspektrums des digitalen Basisbandsignals anhand eines digitalen unmodulierten Nutzdatenstroms auf. Die Modulationsvorrichtung kann einen digitalen unmodulierten Nutzdatenstrom unmittelbar in ein moduliertes digitales, insbesondere komplexwertiges, Basisbandsignal umformen, welches im Frequenzraum, d.h. insbesondere in Form von Fourier-Koeffizienten, vorliegt. Die Modulationsvorrichtung kann dabei eine der der nachfolgend aufgeführten Modulationsverfahren auf den Nutzdatenstrom anwenden: Amplitude Shift Keying (ASK), Phase Shift Keying (PSK), Differential Phase Shift Keying (DPSK), Frequency Shift Keying (FSK), Quadrature Amplitude Modulation (QAM).

Eine vorteilhafte Ausgestaltung sieht vor, dass die Synthesevorrichtung mehrere Signalquellen, insbesondere mehrere Stromquellen, aufweist, über welche periodische Signale mit zweiten Frequenzen in einem gegenüber dem Basisbandbereich erhöhten Frequenzbereich erzeugbar sind, insbesondere wobei jeweils zwei zweite Frequenzen den vorgegebenen Frequenzabstand aufweisen. Der vorgegebene Frequenzabstand kann $\mathit{\Delta}f = BW'/N$ betragen, wobei $BW'$ die Bandbreite des digitalen Basisbandsignals ist.

Vorteilhaft ist es ferner, wenn die Synthesevorrichtung mehrere Gewichtungseinrichtungen aufweist, über welche die Gewichtung der Signalquellen in Abhängigkeit von dem diskreten Frequenzspektrum einstellbar ist, so dass mehrere Signalkomponenten eines hochfrequenten, analogen Signals, insbesondere des hochfrequenten, analogen Sendesignals erzeugbar sind, insbesondere wobei jeweils zwei Signalkomponenten den vorgegebenen Frequenzabstand aufweisen. Die Gewichtungseinrichtungen können als Verstärkungseinrichtungen ausgebildet sein. Bevorzugt ist jeweils einer Signalquelle, beispielsweise einer Stromquelle, genau eine Gewichtungseinrichtung zugeordnet, welche über genau einen Fourier-Koeffizienten steuerbar ist. Über die Gewichtungseinrichtung kann der von der Stromquelle erzeugte Strom moduliert werden. Um ein analoges Sendesignal mit einer im Vergleich zu dem digitalen Basisbandsignal erhöhten Frequenz zu erhalten, kann eine Frequenzumsetzung erfolgen, indem ein Fourier-Koeffizient einer ersten Frequenz in dem Basisbandbereich zur Gewichtung einer zweiten Frequenz dem gegenüber dem Basisbandbereich erhöhten Frequenzbereich herangezogen wird, wobei die zweite Frequenz um eine vorgegebene Frequenzkonstante gegenüber der ersten Frequenz erhöht ist.

In diesem Zusammenhang ist es bevorzugt, wenn der erhöhte Frequenzbereich ein zwischen dem Basisbandbereich und dem Bereich der Sendefrequenzen liegender Zwischenfrequenzbereich ist und wobei die Synthesevorrichtung eine Mischerstufe aufweist, in welcher die periodischen Signale mit zweiten Frequenzen mit einem in Abhängigkeit von dem diskreten Frequenzspektrum erzeugten analogen Oszillatorsignal mischbar sind, so dass mehrere Signalkomponenten des hochfrequenten, analogen Sendesignals erzeugbar sind. Insofern können in dem Zwischenfrequenzbereich Signalkomponenten eines hochfrequenten, analogen Signals synthetisiert werden, welches zur Bildung des hochfrequenten, analogen Sendesignals jeweils mit einem gewichteten, analogen Oszillatorsignal in den Bereich der Sendefrequenzen hochgemischt werden kann.

Bevorzugt weisen die Signalquellen eine Vorrichtung zur direkten digitalen Synthese (engl. Direct Digital Synthesis, DDS) des periodischen Signals auf. Über eine derartige Vorrichtung kann ein analoges, periodisches Signal durch Schaltungselemente erzeugt werden, welche digitale Signale verarbeiten, so dass es nicht erforderlich ist, mehrere Oszillatoren als Teil der Synthesevorrichtung vorzusehen, welche sich gegenseitig stören könnten. Durch die Verwendung von Signalquellen, welche jeweils eine Vorrichtung zur direkten digitalen Synthese des periodischen Signals aufweisen, wird es möglich, eine Vielzahl von periodischen Signalen mit einem vorgegebenen Frequenzabstand zu erzeugen, wobei gegenseitige Störungen der periodischen Signale verringert werden können.

Bevorzugt ist die Schaltungsanordnung als integrierte Schaltungsanordnung ausgebildet. Insbesondere können die Analysevorrichtung und die Synthesevorrichtung auf einem gemeinsamen Substrat ausgebildet sein. Es ist ferner möglich, dass die Modulationsvorrichtung und die Synthesevorrichtung auf einem gemeinsamen Substrat ausgebildet sind.

Gemäß einer vorteilhaften Ausgestaltung weist die Sendeeinrichtung ferner einen zwischen der Synthesevorrichtung und der Antenne angeordneten Verstärker auf, über welchen das Sendesignal verstärkt werden kann. Alternativ oder zusätzlich kann am Eingang der Antenne ein analoges Filter vorgesehen sein, um die Abstrahlung von Störsignalen zusätzlich zu unterdrücken.

Erfindungsgemäß kann die vorstehend beschriebene Schaltungsanordnung zur Erzeugung eines Sendesignals, insbesondere eines hochfrequenten, analogen Einzelträger-Sendesignals, in einem Sendefrequenzband oberhalb von 57 GHz, bevorzugt in einem Bereich von 57 GHz bis 66 GHz, Verwendung finden. Insbesondere ist die beschriebene Schaltungsanordnung geeignet zur Erzeugung von Sendesignalen gemäß dem Standard IEEE 802.11ad in der am Prioritätstag dieser Anmeldung gültigen Fassung. Ebenso ist es erfindungsgemäß vorgesehen, dass die vorstehend beschriebene Sendeeinrichtung zum Senden eines hochfrequenten, analogen Sendesignals, insbesondere eines hochfrequenten, analogen Einzelträger-Sendesignals, in einem Sendefrequenzband oberhalb von 57 GHz, bevorzugt in einem Bereich von 57 GHz bis 66 GHz, verwendet wird, bevorzugt zum Senden von Sendesignalen gemäß dem Standard IEEE 802.11ad in der am Prioritätstag dieser Anmeldung gültigen Fassung.

Zur Lösung der eingangs genannten Aufgabe wird ferner ein Verfahren zum Erzeugen eines hochfrequenten, analogen Sendesignals vorgeschlagen, welches die folgenden Verfahrensschritte aufweist:

- Bereitstellung eines diskreten Frequenzspektrums eines digitalen Basisbandsignals;
- Erzeugung des hochfrequenten, analogen Sendesignals anhand des diskreten Frequenzspektrums mittels einer Vorrichtung zur Durchführung einer kontinuierlichen, inversen Fourier-Transformation; und
- Senden des hochfrequenten, analogen Sendesignals über eine Antenne.

Das hochfrequente, analoge Sendesignal ist insbesondere ein hochfrequentes, analoges Einzelträger-Sendesignal. Das digitale Basisbandsignal ist insbesondere ein moduliertes, digitales Basisbandsignal.

Bei dem erfindungsgemäßen Verfahren wird das digitale Basisbandsignal als diskretes Frequenzspektrum bereitgestellt. In einem weiteren Schritt wird das Signal aus dem Frequenzraum in den Zeitbereich überführt, wobei eine Frequenzumsetzung derart durchgeführt wird, dass anhand des diskreten Frequenzspektrums ein hochfrequentes, analoges Sendesignal erzeugt wird. Bei diesem Verfahren kann auf eine Überabtastung und/oder eine Filterung des digitalen Basisbandsignals verzichtet werden, wodurch die die Aussendung unerwünschter Störfrequenzen beim Senden von Signalen mit hoher Bandbreite verringert werden kann.

Vorteilhaft ist es, wenn wobei zur Bereitstellung des hochfrequenten, analogen Sendesignals einer der beiden nachfolgend genannten Verfahrensschritte durchgeführt wird:

- Berechnung des diskreten Frequenzspektrums des digitalen Basisbandsignals anhand des digitalen Basisbandsignals, insbesondere mittels einer diskreten Fourier-Transformation; oder
- Erzeugung des diskreten Frequenzspektrums des digitalen Basisbandsignals ausgehend von einem digitalen unmodulierten Nutzdatenstrom.

Durch die Berechnung des diskreten Frequenzspektrums auf Grundlage des, insbesondere modulierten, digitalen Basisbandsignals beispielsweise durch eine Anwendung einer diskreten Fourier-Transformation auf das digitale Basisbandsignal ist es möglich, eine Repräsentation des digitalen Basisbandsignals im Frequenzraum zu erzeugen. Alternativ kann eine derartige Repräsentation im Frequenzraum direkt von einem unmodulierten Nutzdatenstrom abgeleitet werden, in dem ausgehend von dem Nutzdatenstrom eine kombinierte Modulation und Transformation in den Frequenzraum erfolgt.

Insofern wird das digitale Basisbandsignal aus dem Zeitbereich in den Frequenzbereich überführt.

Vorteilhaft ist es, wenn die Bereitstellung des diskreten Frequenzspektrums des digitalen Basisbandsignals mittels einer Vorrichtung zur Durchführung einer diskreten Fouriertransformation erfolgt und die Erzeugung des hochfrequenten, analogen Sendesignals anhand des diskreten Frequenzspektrums mittels einer Vorrichtung zur Durchführung einer kontinuierlichen, inversen Fourier-Transformation erfolgt. Besonders vorteilhaft ist es, wenn die Bereitstellung des diskreten Frequenzspektrums des digitalen Basisbandsignals mittels einer Vorrichtung zur Durchführung einer schnellen Fouriertransformation (FFT), insbesondere mit vorgegebener Länge, ausgebildet ist und die die Erzeugung des hochfrequenten, analogen Sendesignals anhand des diskreten Frequenzspektrums mittels einer Vorrichtung zur Durchführung einer kontinuierlichen, inversen Fourier-Transformation erfolgt.

Eine vorteilhafte Ausgestaltung sieht vor, dass der Berechnung des diskreten Frequenzspektrums des digitalen Basisbandsignals eine Fensterung des digitalen Basisbandsignals vorausgeht. Besonders vorteilhaft ist es, wenn mehrere, insbesondere zwei, sich zeitlich überlappende Ausschnitte des Basisbandsignals zur Berechnung des diskreten Frequenzspektrums herangezogen werden. Aus den sich zeitlich überlappenden Ausschnitten des Basisbandsignals können mehrere, insbesondere zwei, diskrete Teil- Frequenzspektren berechnet werden. Die diskreten Teil-Frequenzspektren werden bevorzugt in einem weiteren Schritt zur Bildung des diskreten Frequenzspektrums des digitalen Basisbandsignals zusammengeführt.

Gemäß einer vorteilhaften Ausgestaltung des Verfahrens weist das diskrete Frequenzspektrum mehrere Fourier-Koeffizienten auf, welche jeweils einer ersten Frequenz in einem Basisbandbereich zugeordnet sind, insbesondere wobei jeweils zwei erste Frequenzen einen vorgegebenen Frequenzabstand aufweisen, wobei periodische Signale mit zweiten Frequenzen in einem gegenüber dem Basisbandbereich erhöhten Frequenzbereich erzeugt werden, insbesondere wobei jeweils zwei zweite Frequenzen den vorgegebenen Frequenzabstand aufweisen, wobei anhand der periodischen Signale und der Fourier-Koeffizienten Signalkomponenten des hochfrequenten, analogen Sendesignals erzeugt werden, insbesondere wobei jeweils zwei Signalkomponenten den vorgegebenen Frequenzabstand aufweisen. Es ergibt sich eine Frequenzverschiebung, welche im Frequenzraum durchgeführt wird, so dass eine Frequenzverschiebung im Zeitbereich, beispielsweise durch einen Mischer, nicht erforderlich ist.

In diesem Zusammenhang ist es bevorzugt, wenn der erhöhte Frequenzbereich ein Sendefrequenzbereich ist, und die erzeugten Signalkomponenten zur Erzeugung des hochfrequenten, analogen Sendesignals summiert werden. Zur Erzeugung des hochfrequenten, analogen Sendesignals mit einer im Vergleich zu dem digitalen Basisbandsignal erhöhten Frequenz, kann somit eine Frequenzumsetzung erfolgen, indem ein Fourier-Koeffizient einer ersten Frequenz in dem Basisbandbereich zur Gewichtung einer zweiten Frequenz dem gegenüber dem Basisbandbereich erhöhten Frequenzbereich herangezogen wird, wobei die zweite Frequenz um eine vorgegebene Frequenzkonstante gegenüber der ersten Frequenz erhöht ist.

Gemäß einer alternativen, bevorzugten Ausgestaltung des Verfahrens ist der erhöhte Frequenzbereich ein zwischen dem Frequenzbereich des Basisbandsignals dem Frequenzbereich des Sendesignals liegender Zwischenfrequenzbereich, wobei zur Erzeugung der Signalkomponenten des hochfrequenten, analogen Sendesignals zusätzlich ein gemeinsames Oszillatorsignal (LO) herangezogen wird, wobei die Frequenz des gemeinsamen Oszillatorsignals in einem Bereich unterhalb des Frequenzbereichs des Sendesignals liegt. Insofern können in dem Zwischenfrequenzbereich Signalkomponenten eines hochfrequenten, analogen Signals synthetisiert werden, welches zur Bildung des hochfrequenten, analogen Sendesignals mit dem gemeinsamen Oszillatorsignal in den Bereich der Sendefrequenzen hochgemischt werden kann.

Bei dem Verfahren können alternativ oder zusätzlich auch die im Zusammenhang mit der Sendeeinrichtung und/oder der Schaltungsanordnung beschriebenen vorteilhaften Ausgestaltungen Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhafte Ausführungsform der Erfindung, welche den Erfindungsgedanken nicht einschränkt.

**Kurze Beschreibung der Figuren**

Die **Figur 1** zeigt eine Sendeeinrichtung gemäß dem Stand der Technik.

Die **Figur 2** zeigt eine Sendeeinrichtung zum Senden eines hochfrequenten, analogen Sendesignals gemäß einem ersten Ausführungsbeispiel der Erfindung.

Die **Figur 3** zeigt eine Sendeeinrichtung zum Senden eines hochfrequenten, analogen Sendesignals gemäß einem zweiten Ausführungsbeispiel der Erfindung.

Die **Figur 4** zeigt ein Blockdiagramm eines ersten Ausführungsbeispiels einer Synthesevorrichtung zur Erzeugung eines hochfrequenten, analogen Sendesignals in Abhängigkeit von einem digitalen Basisbandsignal.

Die **Figur 5** zeigt ein Spektraldiagramm zur Veranschaulichung der Frequenzverschiebung im Frequenzbereich.

Die **Figur 6** zeigt ein Blockdiagramm eines zweiten Ausführungsbeispiels einer Synthesevorrichtung zur Erzeugung eines hochfrequenten, analogen Sendesignals in Abhängigkeit von einem digitalen Basisbandsignal.

Die **Figur 7** zeigt ein Blockdiagramm eines dritten Ausführungsbeispiels einer Sendeeinrichtung zum Senden eines hochfrequenten, analogen Sendesignals gemäß der Erfindung.

Die **Figuren 8a und 8b** zeigen eine schematische Darstellung zur Erläuterung der Wirkungsweise der Sendeeinrichtung gemäß Figur 7.

Die **Figur 9** zeigt ein Blockdiagramm eines vierten Ausführungsbeispiels einer Sendeeinrichtung zum Senden eines hochfrequenten, analogen Sendesignals gemäß der Erfindung.

Die **Figuren 10a und 10b** zeigen eine schematische Darstellung zur Erläuterung der Wirkungsweise der Sendeeinrichtung gemäß Figur 9.

**Ausführungsformen der Erfindung**

In den verschiedenen Figuren sind gleiche Teile stets mit den gleichen Bezugszeichen versehen und werden daher in der Regel auch jeweils nur einmal benannt bzw. erwähnt.

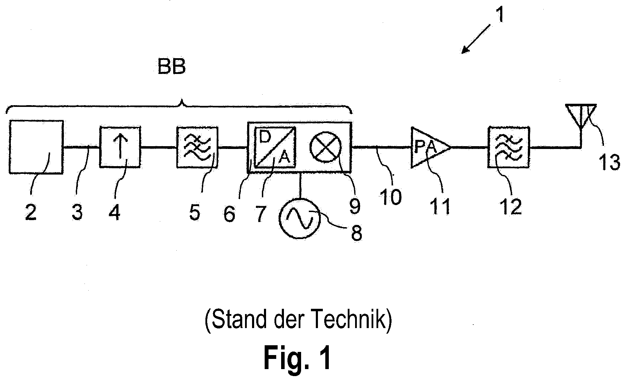

In der **Figur 1** ist eine als RF-Transmitter ausgebildete Sendeeinrichtung 1 zum Senden eines hochfrequenten, analogen Sendesignals 10 gemäß dem Stand der Technik gezeigt, wobei die Elemente der Sendeeinrichtung 1, welche Signale im Basisband verarbeiten, mit dem Bezugszeichen BB gekennzeichnet sind.

Die Sendeeinrichtung 1 weist eine Modulationseinrichtung 2 auf, über welche ein digitales Basisbandsignal 3 bereitgestellt wird. Das digitale Basisbandsignal 3 wird in einer Abtastvorrichtung 4 überabgetastet, d.h. die Abtastung erfolgt mit einer Abtastrate die höher ist als die Nyquist-Frequenz des Basisbandsignals 3. Das überabgetastete Basisbandsignal wird einem digitalen Tiefpassfilter 5 zugeführt, um steile Pegeländerungen des Signals zu glätten. Anschließend wird das überabgetastete und tiefpassgefilterte Basisbandsignal in einem RF-DAC 6 einer Digital-Analog-Wandlung und einer Frequenzumsetzung auf eine Trägerfrequenz unterzogen. Der RF-DAC 6 weist hierzu einen Digital-Analog-Wandler 7 und einen Mischer 9 auf. Die Trägerfrequenz wird über einen Oszillator 8 bereitgestellt.

Der RF-DAC 6 erzeugt ein hochfrequentes, analoges Sendesignal 10, welches über einen Verstärker 11 verstärkt wird. Das verstärkte Sendesignal wird in einem analogen Filter 12 gefiltert und dann über eine Antenne 13 abgestrahlt. Das hochfrequente, analoge Sendesignal 10 ist ein hochfrequentes, analoges Einzelträger-Sendesignal 10.

Die in der Figur 1 gezeigte Sendeeinrichtung 1 weist den Nachteil auf, dass der schaltungstechnische Aufwand zur Realisierung der Überabtastung und digitalen Filterung des Basisbandsignals sehr hoch ist. Zudem werden durch die hohe Schaltfrequenz der Schaltungen zur Prozessierung des Basisbandsignals Glitches erzeugt, durch welche die Aussendung unerwünschter Störsignale gefördert wird. Auch der RF-DAC muss mit einer hohen Taktfrequenz arbeiten, um eine entsprechend hohe Sampling-Rate realisieren zu können. Hierdurch wird die Entstehung von Glitches zusätzlich gefördert.

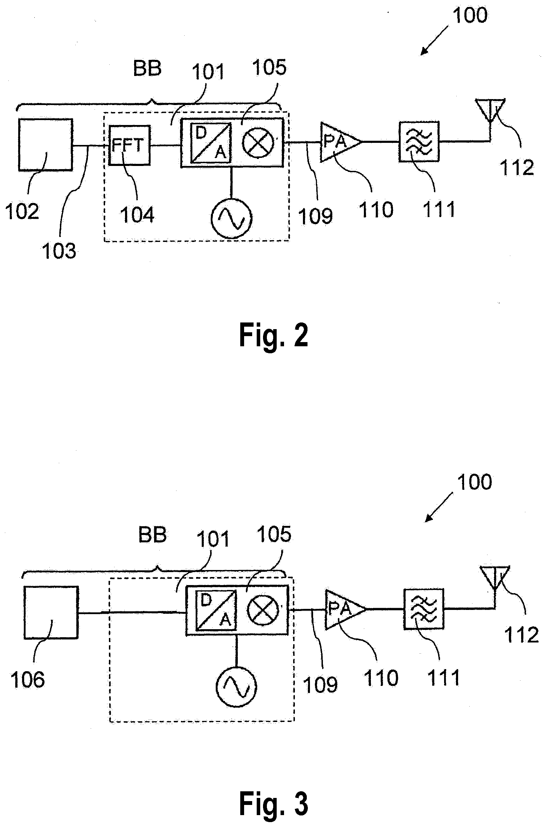

Die **Figur 2** zeigt eine Sendeeinrichtung 100 gemäß einem ersten Ausführungsbeispiel der Erfindung. Solche Elemente der Sendeeinrichtung 1, welche Signale im Basisband verarbeiten, sind mit dem Bezugszeichen BB gekennzeichnet.

Die Sendeeinrichtung 100 ist als RF-Transmitter ausgebildet und weist eine Schaltungsanordnung 101 zur Erzeugung eines hochfrequenten, analogen Sendesignals 109 sowie eine Antenne 112 auf, über welche das Sendesignal abgestrahlt werden kann. Teil der Sendeeinrichtung 100 ist ferner ein herkömmlicher Modulator 102 über welchen ein digitales Basisbandsignal 103 bereitgestellt wird, beispielsweise ein komplexes, digitales Basisbandsignal, welches eine reelle Komponente (I-Komponente) und eine imaginäre Komponente (Q-Komponente) aufweist. Der Modulator 102 erzeugt das digitale, modulierte Basisbandsignal 103 aus einem unmodulierten Nutzdatenstrom. Bei dem Modulator 102 kann es sich beispielsweise um einen QAM-Modulator handeln.

Die Schaltungsanordnung 101 umfasst eine Analysevorrichtung 104 zur Berechnung eines diskreten Frequenzspektrums des Basisbandsignals 103 und eine Synthesevorrichtung 105 zur Erzeugung des hochfrequenten, analogen Sendesignals anhand des diskreten Frequenzspektrums. Somit kann mittels der Schaltungsanordnung 101 ein Verfahren durchgeführt werden, bei welchem mittels der Analysevorrichtung 104 ein diskretes Frequenzspektrum des digitalen Basisbandsignals 103 berechnet wird und anhand des berechneten diskreten Frequenzspektrums ein hochfrequentes, analoges Sendesignal 109, insbesondere ein hochfrequentes, analoges Einzelträger-Sendesignal, erzeugt wird. Es ist nicht erforderlich, das digitale Basisbandsignal 103 einer Überabtastung und/oder einer Filterung zu unterziehen, um Störaussendungen zu verringern. Die Schaltungsanordnung 101 kann mit einer reduzierten Schaltfrequenz betrieben werden, wodurch sich das Auftreten von Glitches reduziert und die Aussendung unerwünschter Störsignale verringert werden kann.

Bei der Schaltungsanordnung 101 gemäß dem ersten Ausführungsbeispiel ist die Analysevorrichtung 104 als Vorrichtung zur Durchführung einer diskreten Fourier-Transformation, insbesondere zur Durchführung einer schnellen Fourier-Transformation (FFT) ausgebildet. Die Analysevorrichtung 104 sampelt jeweils $N$ Symbole des digitalen Basisbandsignals 103 im Zeitbereich und berechnet für diese $N$ Symbole ein diskretes Frequenzspektrum, welches $N$ Fourier-Koeffizienten $c_0$, $c_1$, ... $c_{N-1}$ ($N$-Punkt-FFT) aufweist. Die $N$ Fourier-Koeffizienten stellen ein Maß für die Spektralleistung des Gleichanteils des Basisbandsignals 103 und von $N$-1 Basisbandfrequenzen des Basisbandsignals 103 dar, wobei die $N$-1 Basisbandfrequenzen jeweils einen Abstand von $\Delta f = BW'/N$ aufweisen, wobei $BW'$ die Bandbreite des digitalen Basisbandsignals ist. Die Fourier-Koeffizienten stellen eine Repräsentation des Basisbandsignals 103 im Frequenzraum dar.

In der **Figur 3** ist ein zweites Ausführungsbeispiel einer erfindungsgemäßen Sendeeinrichtung 100 dargestellt. Die Sendeeinrichtung 100 entspricht in weiten Teilen der Sendeeinrichtung des ersten Ausführungsbeispiels. Im Unterschied zu dem ersten Ausführungsbeispiel weist diese Sendeeinrichtung 100 eine Modulationseinrichtung 106 auf, über welche ein diskretes Frequenzspektrum des digitalen Basisbandsignals 103 unmittelbar aus einem digitalen, unmodulierten Nutzdatenstroms erzeugt wird. Bei der Sendeeinrichtung 100 nach dem zweiten Ausführungsbeispiel ist daher keine separate Analysevorrichtung erforderlich, da das digitale, modulierte Basisbandsignal 103 direkt im Frequenzraum bereitgestellt wird.

Bei den zuvor beschriebenen Sendeeinrichtungen 100 kann die Schaltungsanordnung 101 als integrierte Schaltungsanordnung ausgebildet sein. Die Sendeeinrichtungen 100 weisen ferner eine Verstärkungseinrichtung 110 zur Verstärkung des Sendesignals 109 und ein analoges Filter 111 auf, welche im Signalfluss zwischen der Synthesevorrichtung 105 und der Antenne 112 angeordnet sind. Die Verstärkungseinrichtung 110 und/oder das analoge Filter 111 und/oder der Modulator 102 und/oder die Modulationseinrichtung 106 können in einer Abwandlung der in **Figur 2 und 3** dargestellten Ausführungsbeispiele als Teil der Schaltungsanordnung 101 ausgebildet sein. Alternativ können die Verstärkungseinrichtung 110 und/oder das analoge Filter 111 und/oder der Modulator 102 und/oder die Modulationseinrichtung 106 als von der Schaltungsanordnung 101 separate Elemente vorgesehen sein.

Nachfolgend soll näher auf die Ausgestaltung der Synthesevorrichtung 105 eingegangen werden. Diese Ausführungen sind auf sämtliche der vorstehend erläuterten Ausführungsbeispiele der Sendeeinrichtung 100 anwendbar.

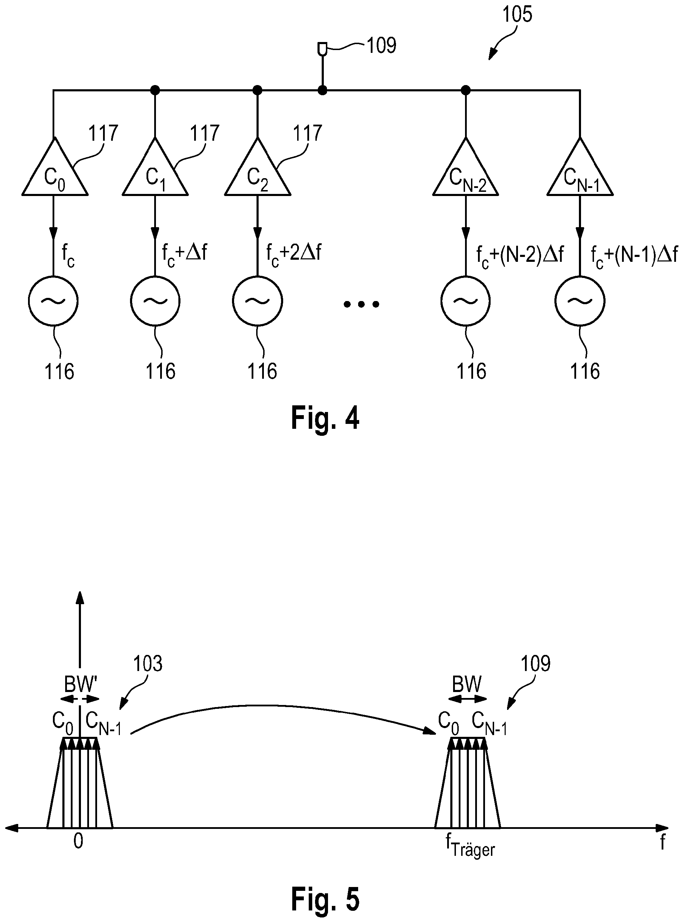

Die Synthesevorrichtung 105 der Schaltungsanordnung 101 ist als Vorrichtung zur Durchführung einer kontinuierlichen, inversen Fourier-Transformation ausgestaltet. Über die Synthesevorrichtung 105 wird - ähnlich wie bei einem RF-DAC - eine Wandlung des digitalen Basisbandsignals 104 in ein kontinuierliches, analoges Sendesignal 109, insbesondere ein Einzelträger-Sendesignal, sowie eine Frequenzverschiebung in ein Sendefrequenzband durchgeführt, welches von dem Basisband um eine vorgegebene Frequenzkonstante $f_c$ verschoben ist. Im Unterschied zu dem in Figur 1 gezeigten RF-DAC 6 wird der Synthesevorrichtung 105 - anstatt eines digitalen Basisbandsignals im Zeitbereich - das von der Analysevorrichtung 104 berechnete diskrete Frequenzspektrum in Form der Fourier-Koeffizienten $c_0$, $c_1$, ... $c_{N-1}$ zugeführt. Diesen Fourier-Koeffizienten $c_0$, $c_1$, ... $c_{N-1}$ werden Frequenzen im Sendefrequenzband zugeordnet, welche jeweils einen Abstand von $\Delta f$ zueinander aufweisen und gegenüber den entsprechenden Frequenzen aus dem Basisbandbereich um die vorgegebene Frequenzkonstante $f_c$ verschoben sind, wie es zur Veranschaulichung in **Figur 5** dargestellt ist. Insofern kann die Synthesevorrichtung als RF-FAC (Radio Frequency Fourier-to-Analog Converter) bezeichnet werden, welcher das Basisbandsignal aus dem Frequenzraum zurück in den Zeitbereich überführt und dabei eine Frequenzumsetzung in das Sendefrequenzband durchführt.

In der **Figur 4** ist ein Blockschaltbild der Synthesevorrichtung 105 gezeigt. Die Synthesevorrichtung 105 weist insgesamt $N$ als Stromquellen ausgebildete Signalquellen 116 auf, die sinusförmige Ströme mit den Sendefrequenzen $f_c$, $f_c+\Delta f$, $f_c+2\Delta f$, ..., $f_c+(N-2)\Delta f$, $f_c+(N-1)\Delta f$ bereitstellen. Der sinusförmige Strom jeweils einer Signalquelle 116 wird über jeweils eine als Verstärkungseinrichtung ausgestaltete Gewichtungseinrichtung 117 moduliert, so dass das Verhältnis der sinusförmigen Ströme zueinander einstellbar ist. Die Gewichtung in den Gewichtungseinrichtungen 117 erfolgt in Abhängigkeit von den Fourier- Koeffizienten $c_0$, $c_1$, ... $c_{N-1}$, wobei jeder Gewichtungseinrichtung 117 jeweils ein Fourier-Koeffizient $c_0$, $c_1$, ... $c_{N-1}$ zugeordnet ist. Der Fourier-Koeffizient $c_0$, $c_1$, ... $c_{N-1}$ einer Basisbandfrequenz wird dabei einer Sendefrequenz zugeordnet, welche sich durch Addition einer vorgegebenen Frequenzkonstante $f_c$ mit der jeweiligen Basisbandfrequenz ergibt.

Wie der Darstellung in **Figur 4** ferner entnommen werden kann, sind die Gewichtungseinrichtungen 117 mit einem gemeinsamen Ausgang der Synthesevorrichtung 105 verbunden, an welchem das erzeugte Sendesignal 109 verfügbar ist. Das Sendesignal 109 ergibt sich dabei durch Summierung der gewichteten Ströme der einzelnen Signalquellen 116. Es werden also mehrere Signalkomponenten des hochfrequenten, analogen Sendesignals 109, insbesondere des hochfrequenten, analogen Einzelträger-Sendesignals, erzeugt, wobei jeweils zwei Signalkomponenten den vorgegebenen Frequenzabstand $\Delta f$ aufweisen. Der erhaltene Summenstrom ist eine in das Sendefrequenzband verschobene Rekonstruktion des Basisband-Zeitsignals, wobei die Übergänge zwischen den einzelnen Symbolen sinusförmig sind. Die Bandbreite BW des Sendesignals 109 entspricht der Bandbreite BW' des Basisbandsignals 103, vgl. auch **Figur 5.**

Zur Übertragung von $N$ Symbolen werden die Fourier-Koeffizienten $c_0$, $c_1$, ... $c_{N-1}$ jeweils einmal gesetzt, so dass die Schaltfrequenz der Synthesevorrichtung 105, insbesondere der Gewichtungsvorrichtungen 117, vergleichsweise gering ist.

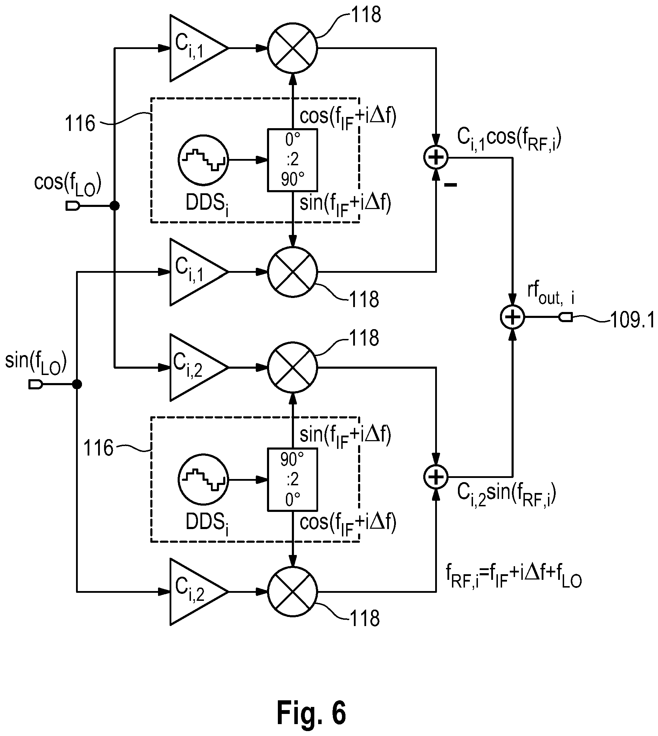

In der **Figur 6** ist ein Blockschaltbild eines zweites Ausführungsbeispiels einer Synthesevorrichtung 105 gezeigt, wobei das Blockschaltbild die Elemente umfasst, welche zur Erzeugung genau einer Signalkomponente 109.1 des hochfrequenten, analogen Sendesignals 109 aus komplexwertigen Fourier-Koeffizienten mit einem Realteil $c_{i,1}$ und einem Imaginärteil $c_{i,2}$ erforderlich sind. Das bedeutet, dass die Synthesevorrichtung 105 insgesamt N-fach den in **Figur 6** gezeigten Aufbau umfasst. Die Signalkomponenten 109.1 werden zur Bildung des hochfrequenten, analogen Sendesignals 109 anschließend summiert.

Bei dieser Synthesevorrichtung 105 werden periodische Signale in einem erhöhten Frequenzbereich generiert, welcher ein zwischen dem Basisbandbereich und dem Bereich der Sendefrequenzen liegender Zwischenfrequenzbereich ist. Insofern wird das Basisbandsignal zunächst in einen Zwischenfrequenzbereich und dann in den Sendefrequenzbereich transformiert. Zunächst wird der Realteil $c_{i,1}$ und der Imaginärteil $c_{i,2}$ der komplexwertigen Fourier-Koeffizienten mit jeweils einem ersten Oszillatorsignal $\cos(f_{LO})$ und einem gegenüber dem ersten Oszillatorsignal um 90° phasenverschobenen, zweiten Oszillatorsignal $\sin(f_{LO})$ multiplikativ gemischt. Das erste Oszillatorsignal $\cos(f_{LO})$ und das zweite Oszillatorsignal $\sin(f_{LO})$ stellen zwei gemeinsame Oszillatorsignale dar, welche zur Erzeugung sämtlicher Signalkomponenten 109.1 des hochfrequenten, analogen Sendesignals 109 herangezogen werden. Die Frequenz des ersten Oszillatorsignals $\cos(f_{LO})$ und des zweiten Oszillatorsignals $\sin(f_{LO})$ ist identisch und liegt unterhalb der Sendefrequenz des Sendesignals 109. Insofern werden folgende Zwischenfrequenz-Signale gebildet: Ein erstes Zwischenfrequenz-Signal wird aus dem ersten Oszillatorsignal $\cos(f_{LO})$ und dem Realteil $c_{i,1}$ des Fourier-Koeffizienten gebildet. Ein zweites Zwischenfrequenz-Signal wird aus dem zweiten Oszillatorsignal $\sin(f_{LO})$ und dem Realteil $c_{i,1}$ des Fourier-Koeffizienten erzeugt. Ferner wird aus dem ersten Oszillatorsignal $\cos(f_{LO})$ und dem Imaginärteil $c_{i,2}$ der komplexwertigen Fourier-Koeffizienten ein drittes Zwischenfrequenz-Signal gebildet. Ein viertes Zwischenfrequenz-Signal wird aus dem zweiten Oszillatorsignal $\sin(f_{LO})$ und dem Imaginärteil $c_{i,2}$ erzeugt.

Ferner umfasst die Synthesevorrichtung 105 mehrere Signalquellen 116 zur Generierung der periodischen Signale, welche in einem gegenüber dem Basisbandbereich erhöhten Frequenzbereich erzeugt werden., Die Signalquellen 116 weisen jeweils eine Vorrichtung zur direkten digitalen Synthese (DDS) der periodischen Signale auf, welche nachfolgend als DDS-Vorrichtung bezeichnet wird. Jede DDS-Vorrichtung erzeugt ausgehend von einem digitalen Zähler ein periodisches DDS-Signal mit einer vorgegebenen Frequenz. Von diesem DDS-Signal wird ein erstes analoges, periodisches Signal $\cos(f_{IF}+i\Delta F)$ und ein zweites, gegenüber dem ersten periodischen Signal $\cos(f_{IF}+i\Delta F)$ um 90° phasenversetztes, zweites analoges, periodisches Signal $\sin(f_{IF}+i\Delta F)$ abgeleitet, welche beide die halbe Frequenz des DDS-Signals aufweisen. Zwei der in den Signalquellen 116 erzeugten periodischen Signale $\cos(f_{IF}+i\Delta F)$, $\sin(f_{IF}+i\Delta F)$ weisen jeweils den vorgegebenen Frequenzabstand $\Delta f$ auf. Die periodischen Signale $\cos(f_{IF}+i\Delta F)$, $\sin(f_{IF}+i\Delta F)$ werden in einer mehrere Mischer 118 umfassenden Mischerstufe jeweils mit einem der Zwischenfrequenz-Signale gemischt. Das erste Zwischenfrequenz-Signal und das vierte Zwischenfrequenz-Signal werden jeweils mit dem ersten periodischen Signal $\cos(f_{IF}+i\Delta F)$ gemischt. Ferner werden das zweite Zwischenfrequenz-signal und das dritte Zwischenfrequenz -Signal mit dem zweiten, analogen, periodischen Signal $\sin(f_{IF}+i\Delta F)$ gemischt. Die so erhaltenen Mischprodukte werden derart verknüpft, dass das untere Seitenband in der Sendesignalkomponente 109.1 unterdrückt wird, so dass ein HF-Signal $HF_{OSB}$ erhalten wird, welches ausschließlich das obere Seitenband enthält. Die Verknüpfung genügt der Beziehung

$$HF= ZF1 \cdot \cos(f_{IF}+i\Delta F) \mp ZF2 \cdot \sin(f_{IF}+i\Delta F) + ZF3 \cdot \sin(f_{IF}+i\Delta F) \pm ZF4 \cdot \cos(f_{IF}+i\Delta F),$$

wobei HF das HF-Signal, ZF1 das erste Zwischenfrequenz-Signal, ZF2 das zweite Zwischenfrequenz Signal, ZF3 das dritte Zwischenfrequenz-Signal, ZF4 das vierte Zwischenfrequenz-Signal, $\cos(f_{IF}+i\Delta F)$ das erste analoge, periodische Signal und $\sin(f_{IF}+i\Delta F)$ das zweite analoge, periodische Signal bezeichnet. Auf diese Weise kann sichergestellt werden, dass das erzeugte Sendesignal 109 nur Frequenzanteile entweder im oberen oder im unteren Seitenband aufweist, da sich entweder solche Signale, die Frequenzanteile im unteren Seitenband erzeugen, oder solche Signale, die Frequenzanteile im oberen Seitenband erzeugen, gegeneinander aufheben. Auf eine Filterung des Sendsignals zur Unterdrückung des oberen oder unteren Seitenbands kann daher verzichtet werden.

Bei der Synthesevorrichtung nach Figur 6 werden die Fourier-Koeffizienten zunächst mit dem ersten Oszillatorsignal $\cos(f_{LO})$ und dem gegenüber dem ersten Oszillatorsignal um 90° phasenverschobenen, zweiten Oszillatorsignal $\sin(f_{LO})$ multiplikativ gemischt bevor eine Mischung mit dem mittels der DDS-Vorrichtung erzeugten ersten periodischen Signal $\cos(f_{IF}+i\Delta F)$ und dem zweiten periodischen Signal $\cos(f_{IF}+i\Delta F)$ erfolgt. In einer Abwandlung der in Figur 6 gezeigten Synthesevorrichtung 105 wird dieses Prinzip umgekehrt, so dass zunächst die Mischung mit dem mittels der DDS-Vorrichtung erzeugten ersten periodischen Signal $\cos(f_{IF}+i\Delta F)$ und dem zweiten periodischen Signal $\cos(f_{IF}+i\Delta F)$ erfolgt und in einem zweiten Schritt die Mischung mit dem gemeinsamen ersten Oszillatorsignal $\cos(f_{LO})$ und dem gemeinsamen zweiten Oszillatorsignal $\sin(f_{LO})$

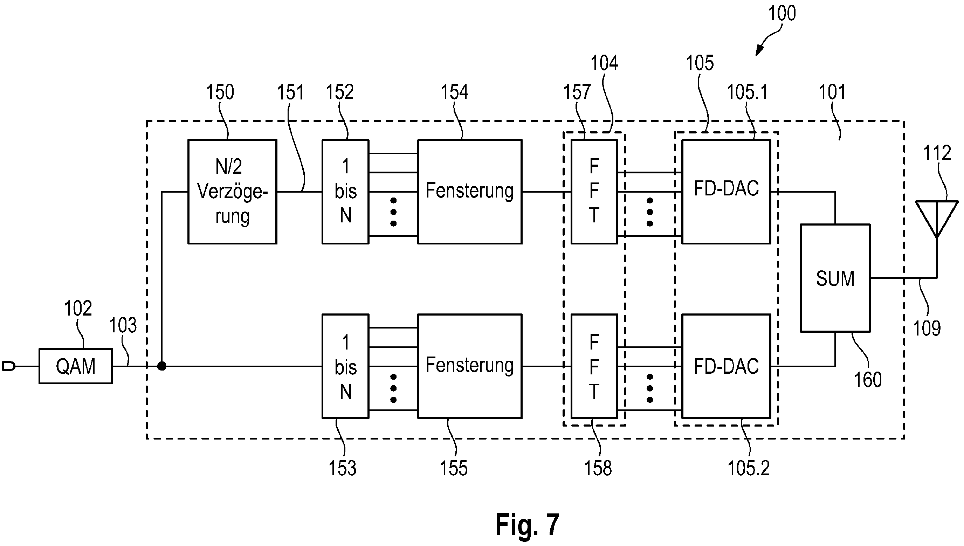

Die **Figur 7** zeigt ein drittes Ausführungsbeispiel einer Sendeeinrichtung 100 zum Senden eines hochfrequenten, analogen Sendesignals 109, welches als Einzelträger-Sendesignal ausgebildet ist. Insofern handelt es sich um eine Sendeeinrichtung 100 nach Art eines RF-Transmitters für ein Einzelträger-Sendesignal. Die Sendeeinrichtung 100 weist einen Modulator 102, eine Schaltungsanordnung 101 zum Erzeugen des hochfrequenten, analogen Sendesignals 109 und eine Antenne 112 auf, über welche das Sendesignal 109 abgestrahlt wird. Bei der Schaltungsanordnung 101 sind besondere Maßnahmen ergriffen worden, um unerwünschte Auswirkungen auf die Qualität des Sendesignals 109 zu reduzieren. Die Sendeeinrichtung 100 gemäß dem dritten Ausführungsbeispiel benutzt einen zusätzlichen Verfahrensschritt, welcher der Berechnung des diskreten Frequenzspektrums vorausgeht und auch als Fensterung (engl. windowing) bezeichnet wird.

Die Analysevorrichtung 104 der Schaltungsanordnung 101 ist als Vorrichtung zur diskreten Fouriertransformation ausgebildet und weist mehrere, insbesondere zwei, Transformationseinheiten 157, 158 auf. Jeder dieser Transformationseinheiten 157, 158 werden jeweils Ausschnitte des Basisbandsignals 103 zugeführt, welche einer vorgegebenen Fensterbreite von N Symbolen entsprechen. Hierzu wird das modulierte, digitale Basisbandsignal 103 in einer Verzögerungseinrichtung 150 verzögert, insbesondere um eine Dauer, die der Hälfte einer Fensterbreite N entspricht. Die Verzögerungseinrichtung 150 erzeugt ein verzögertes Basisbandsignal 151. Das nicht-verzögerte Basisbandsignal 103 wird einem ersten Seriell-Parallel-Wandler 153 und das verzögerte Basisbandsignal 151 wird einem zweiten Seriell-Parallel-Wandler 152 zugeführt.

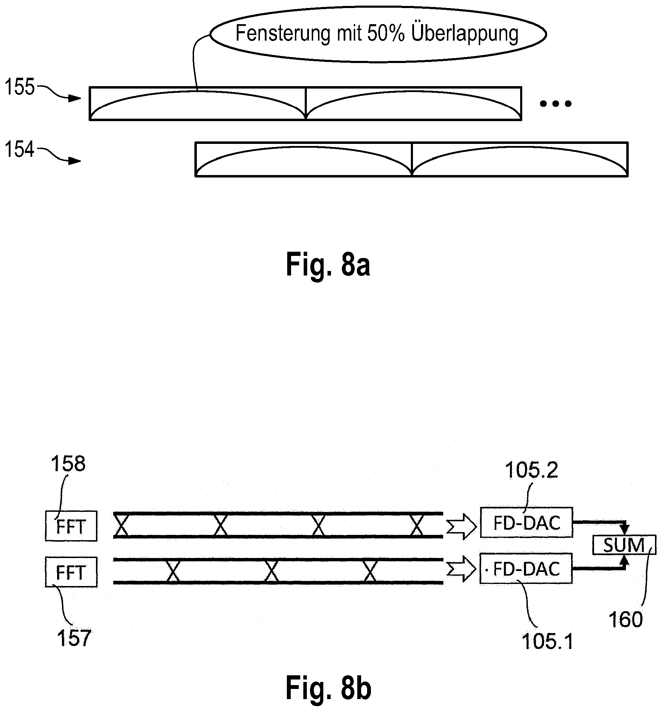

Die durch die Seriell-Parallel-Wandler 152, 153 parallelisierten Basisbandsignale werden jeweils einer Fensterungseinheit 154, 155 zugeführt, in welcher die parallelisierten Basisbandsignale mit einer vorgegebenen Fensterfunktion gewichtet werden, vgl. **Figur 8a.** Die vorgegebene Fensterfunktion ist derart ausgestaltet, dass die Amplituden der gewichteten Signale an den Rändern des jeweiligen Fensters gegen Null tendieren. Das bedeutet, dass die Fensterfunktion am Rand des Fensters eine höhere Dämpfung aufweist als in der Mitte des Fensters. Hierdurch kann das Entstehen von Diskontinuitäten und/oder hochfrequenten Störungen in den hochfrequenten, analogen Sendesignal 109 reduziert werden.

Die durch die Fensterungseinheiten 154, 155 gewichteten, parallelisierten Basisbandsignale werden der Analysevorrichtung 104 zugeführt.

Die Transformationseinheiten 157, 158 der Analysevorrichtung 104 führen parallel eine diskrete Fouriertransformation der jeweiligen Ausschnitte des Basisbandsignals durch. In einer ersten Transformationseinheit 158 wird das in dem ersten Seriell-Parallel-Wandler 153 parallelisierte und in einer ersten der Fenstereinheit 155 gewichtete Basisbandsignal einer diskreten Fouriertransformation unterzogen. In einer zweiten Transformationseinheit 157 wird das in der Verzögerungseinheit 150 verzögerte, in dem zweiten Seriell-Parallel-Wandler 152 parallelisierte und in der zweiten Fensterungseinheit 154 gewichtete Basisbandsignal einer diskreten Fouriertransformation unterzogen. Die Transformationseinheiten 157, 158 berechnen jeweils ein diskretes Teil-Frequenzspektrum, welches N Fourier Koeffizienten aufweist. Die Fourier-Koeffizienten stellen eine Repräsentation des jeweiligen Ausschnitts des Basisbandsignals 103 im Frequenzraum dar.

Das diskrete Teil-Frequenzspektrum der ersten Transformationseinheit 158 wird einer ersten Teil-Synthesevorrichtung 105.2 der Synthesevorrichtung zugeführt. Das diskrete Teil-Frequenzspektrum der zweiten Transformationseinheit 157 wird einer zweiten Teil-Synthesevorrichtung 105.1 der Synthesevorrichtung zugeführt. Die Teil-Synthesevorrichtungen 105.1, 105.2 können wie vorstehend im Zusammenhang mit den Figuren 4 bis 6 beschrieben wurde ausgestaltet sein. Die Teil-Synthesevorrichtungen 105.1, 105.2 arbeiten phasenverschoben, insbesondere derart, dass die internen Signale der Teil-Synthesevorrichtungen 105.1, 105.2 unterschiedlicher Frequenzen um die Hälfte der Fensterlänge verschoben sind, wobei die Fensterlänge die Symboldauer der Modulationsvorrichtung 102 multipliziert mit der Fensterlänge *N* ist. Die von den Teil-Synthesevorrichtungen 105.1 , 105.2 erzeugten hochfrequenten, analogen Einzelträger-Teilsignale werden über einen Summierer zu dem hochfrequenten, analogen Einzelträger-Sendesignal 109 zusammengefasst, vgl. **Figur 8b.** Bei dieser Sendeeinrichtung 100 ist kein Oversampling und keine Filterung des Basisbandsignals 103 erforderlich.

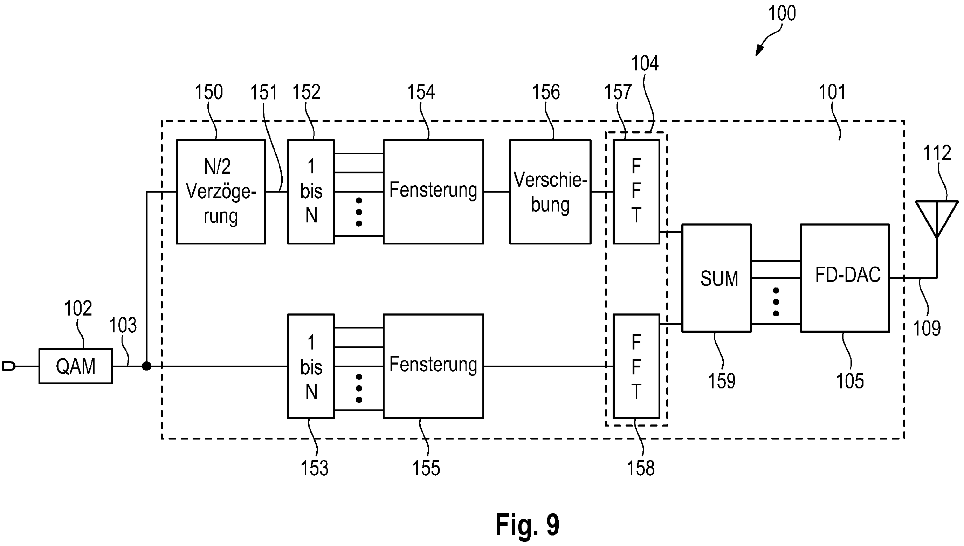

Die **Figur 9** zeigt ein viertes Ausführungsbeispiel einer Sendeeinrichtung 100 zum Senden eines hochfrequenten, analogen Sendesignals 109, welches als Einzelträger-Sendesignal ausgebildet ist. Insofern handelt es sich um eine Sendeeinrichtung 100 nach Art eines RF-Transmitters für ein Einzelträger-Sendesignal. Die Sendeeinrichtung 100 weist einen Modulator 102, eine Schaltungsanordnung 101 zum Erzeugen des hochfrequenten, analogen Sendesignals 109 und eine Antenne 112 auf, über welche das Sendesignal 109 abgestrahlt wird. Bei der Schaltungsanordnung 101 sind besondere Maßnahmen ergriffen worden, um unerwünschte Auswirkungen auf die Qualität des Sendesignals 109 zu reduzieren. Die Sendeeinrichtung 100 gemäß dem vierten Ausführungsbeispiel benutzt einen zusätzlichen Verfahrensschritt, welcher der Berechnung des diskreten Frequenzspektrums vorausgeht und auch als Fensterung (engl. windowing) bezeichnet wird.

Die Analysevorrichtung 104 der Schaltungsanordnung 101 ist als Vorrichtung zur diskreten Fouriertransformation ausgebildet und weist mehrere, insbesondere zwei, Transformationseinheiten 157, 158 auf. Jeder dieser Transformationseinheiten 157, 158 werden jeweils Ausschnitte des Basisbandsignals 103 zugeführt, welche einer vorgegebenen Fensterbreite von N Symbolen entsprechen. Hierzu wird das modulierte, digitale Basisbandsignal 103 in einer Verzögerungseinrichtung 150 verzögert, insbesondere um eine Dauer, die der Hälfte einer Fensterbreite N entspricht. Die Verzögerungseinrichtung 150 erzeugt ein verzögertes Basisbandsignal 151. Das nicht-verzögerte Basisbandsignal 103 wird einem ersten Seriell-Parallel-Wandler 153 und das verzögerte Basisbandsignal 151 wird einem zweiten Seriell-Parallel-Wandler 152 zugeführt.

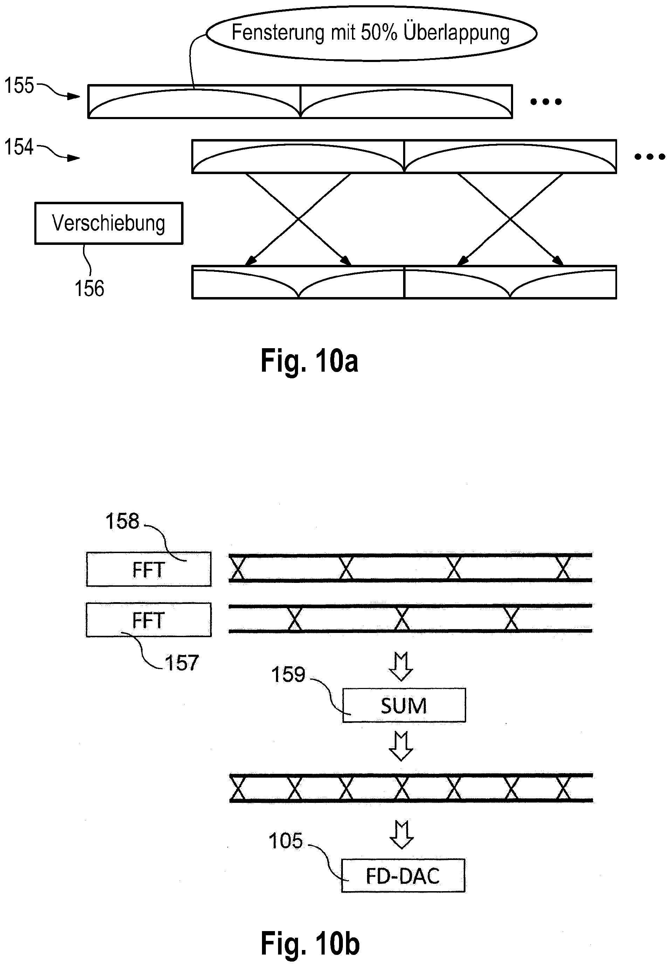

Die durch die Seriell-Parallel-Wandler 152, 153 parallelisierten Basisbandsignale werden jeweils einer Fensterungseinheit 154, 155 zugeführt, in welcher die parallelisierten Basisbandsignale mit einer vorgegebenen Fensterfunktion gewichtet werden, vgl. **Figur 10a.** Die vorgegebene Fensterfunktion ist derart ausgestaltet, dass die Amplituden der gewichteten Signale an den Rändern des jeweiligen Fensters gegen Null tendieren. Das bedeutet, dass die Fensterfunktion am Rand des Fensters eine höhere Dämpfung aufweist als in der Mitte des Fensters. Hierdurch kann das Entstehen von Diskontinuitäten und/oder hochfrequenten Störungen in den hochfrequenten, analogen Sendesignal 109 reduziert werden.

Bevor die durch die Fensterungseinheiten 154, 155 gewichteten, parallelisierten Basisbandsignale der Analysevorrichtung 104 zugeführt werden, erfolgt eine Verschiebeoperation der verzögerten, gewichteten, parallelisierten Basisbandsignale in einer Verschiebeeinheit 156. In der Verschiebeeinheit 156 wird das Fenster in eine erste Fensterhälfte und eine zweite Fensterhälfte unterteilt und die erste Fensterhälfte wird mit der zweiten Fensterhälfte vertauscht, vgl. **Figur 10a.**

Die Transformationseinheiten 157, 158 der Analysevorrichtung 104 führen parallel eine diskrete Fouriertransformation der jeweiligen Ausschnitte des Basisbandsignals durch. In einer ersten Transformationseinheit 158 wird das in dem ersten Seriell-Parallel-Wandler 153 parallelisierte und in einer ersten der Fenstereinheit 155 gewichtete Basisbandsignal einer diskreten Fouriertransformation unterzogen. In einer zweiten Transformationseinheit 157 wird das in der Verzögerungseinheit 150 verzögerte, in dem zweiten Seriell-Parallel-Wandler 152 parallelisierte, in der zweiten Fensterungseinheit 154 gewichtete und in der Verschiebeeinheit 156 bearbeitete Basisbandsignal einer diskreten Fouriertransformation unterzogen. Die Transformationseinheiten 157, 158 berechnen jeweils ein diskretes Teil-Frequenzspektrum, welches N Fourier Koeffizienten aufweist. Die Fourier-Koeffizienten stellen eine Repräsentation des jeweiligen Ausschnitts des Basisbandsignals 103 im Frequenzraum dar.

Die diskreten Teil-Frequenzspektren der Transformationseinheiten 157, 158 werden über einen Summierer 159 zusammengeführt, vgl. **Figur 10b.** Der Summierer 159 erzeugt ein diskretes Frequenzspektrum des Basisbandsignals 103, welches der Synthesevorrichtung 105 zugeführt wird. Die Synthesevorrichtung 105 kann wie vorstehend im Zusammenhang mit den Figuren 4 bis 6 beschrieben wurde ausgestaltet sein. Es ist lediglich eine Synthesevorrichtung 105 erforderlich. Das von der Synthesevorrichtung 105 erzeugte hochfrequente, analoge Sendesignal 109 ist ein Einzelträger-Sendesignal mit nur einem Träger. Bei dieser Sendeeinrichtung 100 ist kein Oversampling und keine Filterung des Basisbandsignals 103 erforderlich.

Die vorstehend beschriebenen Sendeeinrichtungen 100 zum Senden eines hochfrequenten, analogen Sendesignals 109, insbesondere eines hochfrequenten, analogen Einzelträger-Sendesignals, weisen eine Antenne 112 zum Senden des Sendesignals 109 und eine Synthesevorrichtung 105 zur Erzeugung des hochfrequenten, analogen Sendesignals anhand eines diskreten Frequenzspektrums eines digitalen, insbesondere modulierten, Basisbandsignals auf. Bei diesen Sendeeinrichtungen 100 ist jeweils eine Schaltungsanordnung 101 vorgesehen, welche die Synthesevorrichtung 105 umfasst. Diese Schaltungsanordnungen 101 können beispielsweise zur Erzeugung eines Sendesignals insbesondere eines hochfrequenten, analogen Einzelträger-Sendesignals, gemäß dem Standard IEEE 802.11ad (Wireless Gigabit) in einem Sendefrequenzband oberhalb von 57 GHz, bevorzugt in einem Bereich von 57 GHz bis 66 GHz verwendet werden.

**Bezugszeichenliste**

| | |
|---|---|
| 1 | Sendeeinrichtung |
| 2 | Modulationseinrichtung |
| 3 | Basisbandsignal |
| 4 | Abtastvorrichtung |
| 5 | Tiefpassfilter |
| 6 | RF-DAC |
| 7 | Digital-Analog-Wandler |
| 8 | Oszillator |
| 9 | Mischer |
| 10 | Sendesignal |
| 11 | Verstärker |
| 12 | analoges Filter |
| 13 | Antenne |

| | |
|---|---|
| 100 | Sendeeinrichtung |
| 101 | Schaltungsanordnung |
| 102 | Modulator |
| 103 | digitales Basisbandsignal |
| 104 | Analysevorrichtung |
| 105 | Synthesevorrichtung |
| 105.1 | Teil-Synthesevorrichtung |
| 105.2 | Teil-Synthesevorrichtung |
| 106 | Modulationseinrichtung |
| 109 | kontinuierliches, analoges Sendesignal |
| 110 | Verstärkungseinrichtung |
| 111 | analoges Filter |
| 112 | Antenne |
| 116 | Signalquelle |
| 117 | Gewichtungseinrichtung |
| 118 | Mischer |

| | |
|---|---|
| 150 | Verzögerungseinheit |
| 151 | verzögertes Basisbandsignal |
| 152 | Seriell-Parallel-Wandler |
| 153 | Seriell-Parallel-Wandler |
| 154 | Fensterungseinheit |
| 155 | Fensterungseinheit |
| 156 | Verschiebeeinheit |
| 157 | Transformationseinheit |
| 158 | Transformationseinheit |
| 159 | Summierer |
| 160 | Summierer |

| | |
|---|---|
| BB | Basisbandbereich |
| BW' | Bandbreite des Basisbandsignals |
| BW | Bandbreite des Sendesignals |
| $c_0, c_1, \dots c_{N-1}$ | Fourier-Koeffizienten |

**Patentansprüche**

1.  Schaltungsanordnung (101) zum Erzeugen eines hochfrequenten, analogen Sendesignals (109), wobei die Schaltungsanordnung eine Synthesevorrichtung (105) zur Erzeugung des hochfrequenten, analogen Sendesignals (109) anhand eines diskreten Frequenzspektrums eines digitalen, Basisbandsignals (103) aufweist,
    **dadurch gekennzeichnet, dass**
    die Synthesevorrichtung (105) eine Vorrichtung zur Durchführung einer kontinuierlichen, inversen Fourier-Transformation ist.

2.  Sendeeinrichtung zum Senden eines hochfrequenten, analogen Sendesignals (109), wobei die Sendeeinrichtung (100) eine Antenne (112) zum Senden des Sendesignals (109) aufweist, wobei die Sendeeinrichtung (100) eine Schaltungsanordnung (101) nach Anspruch 1 zur Erzeugung des hochfrequenten, analogen Sendesignals (109) anhand eines diskreten Frequenzspektrums eines digitalen Basisbandsignals (103) aufweist.

3.  Sendeeinrichtung nach Anspruch 2, wobei das diskrete Frequenzspektrum mehrere Fourier-Koeffizienten ($c_0$, $c_1$, ... $c_{N-1}$) aufweist, welche jeweils einer ersten Frequenz in einem Basisbandbereich zugeordnet sind, wobei jeweils zwei erste Frequenzen einen vorgegebenen Frequenzabstand ($\Delta f$) aufweisen.

4.  Sendeeinrichtung nach einem der Ansprüche 2 oder 3, wobei die Sendeeinrichtung (100) eine Analysevorrichtung (104) zur Berechnung des diskreten Frequenzspektrums anhand des digitalen Basisbandsignals (103) aufweist, die als Vorrichtung zur Durchführung einer diskreten Fourier-Transformation des digitalen Basisbandsignals (103) ausgestaltet ist.

5.  Sendeeinrichtung nach einem der Ansprüche 2 bis 3, wobei die Sendeeinrichtung (100) eine Modulationsvorrichtung zur Erzeugung eines diskreten Frequenzspektrums des digitalen Basisbandsignals (103) anhand eines digitalen, unmodulierten Nutzdatenstroms aufweist.

6.  Sendeeinrichtung nach einem der Ansprüche 2 bis 5, wobei die Synthesevorrichtung (105) mehrere Signalquellen (116) aufweist, über welche periodische Signale mit zweiten Frequenzen in einem gegenüber dem Basisbandbereich erhöhten Frequenzbereich erzeugbar sind, wobei jeweils zwei zweite Frequenzen den vorgegebenen Frequenzabstand ($\Delta f$) aufweisen.

7.  Sendeeinrichtung nach Anspruch 6, wobei die Synthesevorrichtung (105) mehrere Gewichtungseinrichtungen (117) aufweist, über welche die Gewichtung der Signalquellen (116) in Abhängigkeit von dem diskreten Frequenzspektrum einstellbar ist, so dass mehrere Signalkomponenten des hochfrequenten, analogen Sendesignals erzeugbar sind, wobei jeweils zwei Signalkomponenten den vorgegebenen Frequenzabstand ($\Delta f$) aufweisen.

8.  Sendeeinrichtung nach Anspruch 6, wobei der erhöhte Frequenzbereich ein zwischen dem Basisbandbereich und dem Bereich der Sendefrequenzen liegender Zwischenfrequenzbereich ist und wobei die Synthesevorrichtung (105) eine Mischerstufe aufweist, in welcher die periodischen Signale mit zweiten Frequenzen mit einem in Abhängigkeit von dem diskreten Frequenzspektrum erzeugten analogen, Oszillatorsignal mischbar sind, so dass mehrere Signalkomponenten des hochfrequenten, analogen Sendesignals erzeugbar sind.

9.  Sendeeinrichtung nach einem der Ansprüche 7 bis 8, wobei die Signalquellen (116) eine Vorrichtung zur direkten digitalen Synthese des periodischen Signals aufweisen.

10. Verwendung einer Schaltungsanordnung (101) nach Anspruch 1 zur Erzeugung eines hochfrequenten, analogen Sendesignals (109) in einem Sendefrequenzband oberhalb von 57 GHz.

11. Verfahren zum Senden eines hochfrequenten, analogen Sendesignals (109) mit den folgenden Verfahrensschritten:

    - Bereitstellung eines diskreten Frequenzspektrums eines digitalen Basisbandsignals (103);
    - Erzeugung des hochfrequenten, analogen Sendesignals (109) anhand des diskreten Frequenzspektrums mittels einer Vorrichtung zur Durchführung einer kontinuierlichen, inversen Fourier-Transformation; und
    - Senden des hochfrequenten, analogen Sendesignals (109) über eine Antenne (112).

12. Verfahren nach Anspruch 11, wobei zur Bereitstellung des hochfrequenten, analogen Sendesignals (109) der nachfolgend genannte Verfahrensschritt durchgeführt wird:

- Berechnung des diskreten Frequenzspektrums des digitalen Basisbandsignals (103) anhand des digitalen Basisbandsignals (103) mittels einer diskreten Fourier-Transformation.

13. Verfahren nach Anspruch 12, wobei der Berechnung des diskreten Frequenzspektrums des digitalen Basisbandsignals (103) eine Fensterung des digitalen Basisbandsignals (103) vorausgeht.

14. Verfahren nach Anspruch 11, wobei zur Bereitstellung des hochfrequenten, analogen Sendesignals (109) der nachfolgend genannte Verfahrensschritt durchgeführt wird:

- Erzeugung des diskreten Frequenzspektrums des digitalen Basisbandsignals (103) ausgehend von einem digitalen unmodulierten Nutzdatenstrom.

15. Verfahren nach einem der Ansprüche 11 bis 14, wobei das diskrete Frequenzspektrum mehrere Fourier-Koeffizienten ($c_0$, $c_1$, ... $c_{N-1}$) aufweist, welche jeweils einer ersten Frequenz in einem Basisbandbereich zugeordnet sind, wobei jeweils zwei erste Frequenzen einen vorgegebenen Frequenzabstand ($\Delta f$) aufweisen, wobei periodische Signale mit zweiten Frequenzen in einem gegenüber dem Basisbandbereich erhöhten Frequenzbereich erzeugt werden, wobei jeweils zwei zweite Frequenzen den vorgegebenen Frequenzabstand ($\Delta f$) aufweisen, wobei anhand der periodischen Signale und der Fourier-Koeffizienten ($c_0$, $c_1$, ... $c_{N-1}$) Signalkomponenten des hochfrequenten, analogen Sendesignals erzeugt werden, wobei jeweils zwei Signalkomponenten den vorgegebenen Frequenzabstand ($\Delta f$) aufweisen.

**Claims**

1. Circuit arrangement (101) for generating a radio-frequency analogue transmission signal (109), wherein the circuit arrangement has a synthesis apparatus (105) for generating the radio-frequency analogue transmission signal (109) on the basis of a discrete frequency spectrum of a digital baseband signal (103),
**characterized in that**
the synthesis apparatus (105) is an apparatus for carrying out a continuous inverse Fourier transform.

2. Transmission device for transmitting a radio-frequency analogue transmission signal (109), wherein the transmission device (100) has an antenna (112) for transmitting the transmission signal (109), wherein the transmission device (100) has a circuit arrangement (101) according to Claim 1 for generating the radio-frequency analogue transmission signal (109) on the basis of a discrete frequency spectrum of a digital baseband signal (103) .

3. Transmission device according to Claim 2, wherein the discrete frequency spectrum has a plurality of Fourier coefficients ($c_0$, $c_1$, ... $c_{N-1}$) each assigned to a first frequency in a baseband range, wherein two first frequencies each have a predefined frequency spacing ($\Delta f$).

4. Transmission device according to either of Claims 2 and 3, wherein the transmission device (100) has an analysis apparatus (104) for calculating the discrete frequency spectrum on the basis of the digital baseband signal (103), which analysis apparatus is in the form of an apparatus for carrying out a discrete Fourier transform of the digital baseband signal (103).

5. Transmission device according to one of Claims 2 to 3, wherein the transmission device (100) has a modulation apparatus for generating a discrete frequency spectrum of the digital baseband signal (103) on the basis of a digital unmodulated payload data stream.

6. Transmission device according to one of Claims 2 to 5, wherein the synthesis apparatus (105) has a plurality of signal sources (116) which can be used to generate periodic signals with second frequencies in a frequency range which is increased in comparison with the baseband range, wherein two second frequencies each have the predefined frequency spacing ($\Delta f$).

7. Transmission device according to Claim 6, wherein the synthesis apparatus (105) has a plurality of weighting devices (117) which can be used to set the weighting of the signal sources (116) on the basis of the discrete frequency spectrum, with the result that a plurality of signal components of the radio-frequency analogue transmission signal can be generated, wherein two signal components each have the predefined frequency spacing ($\Delta f$).

**8.** Transmission device according to Claim 6, wherein the increased frequency range is an intermediate frequency range between the baseband range and the range of the transmission frequencies, and wherein the synthesis apparatus (105) has a mixer stage in which the periodic signals with second frequencies can be mixed with an analogue oscillator signal generated on the basis of the discrete frequency spectrum, with the result that a plurality of signal components of the radio-frequency analogue transmission signal can be generated.

**9.** Transmission device according to one of Claims 7 to 8, wherein the signal sources (116) have an apparatus for the direct digital synthesis of the periodic signal.

**10.** Use of a circuit arrangement (101) according to Claim 1 to generate a radio-frequency analogue transmission signal (109) in a transmission frequency band above 57 GHz.

**11.** Method for transmitting a radio-frequency analogue transmission signal (109), having the following method steps:

- providing a discrete frequency spectrum of a digital baseband signal (103);
- generating the radio-frequency analogue transmission signal (109) on the basis of the discrete frequency spectrum by means of an apparatus for carrying out a continuous inverse Fourier transform; and
- transmitting the radio-frequency analogue transmission signal (109) via an antenna (112).

**12.** Method according to Claim 11, wherein the method step mentioned below is carried out for the purpose of providing the radio-frequency analogue transmission signal (109):

- calculating the discrete frequency spectrum of the digital baseband signal (103) on the basis of the digital baseband signal (103) by means of a discrete Fourier transform.

**13.** Method according to Claim 12, wherein windowing of the digital baseband signal (103) proceeds the calculation of the discrete frequency spectrum of the digital baseband signal (103).

**14.** Method according to Claim 11, wherein the method step mentioned below is carried out for the purpose of providing the radio-frequency analogue transmission signal (109):

- generating the discrete frequency spectrum of the digital baseband signal (103) on the basis of a digital unmodulated payload data stream.

**15.** Method according to one of Claims 11 to 14, wherein the discrete frequency spectrum has a plurality of Fourier coefficients ($c_0$, $c_1$, ... $c_{N-1}$) each assigned to a first frequency in a baseband range, wherein two first frequencies each have a predefined frequency spacing ($\Delta f$), wherein periodic signals with second frequencies are generated in a frequency range which is increased in comparison with the baseband range, wherein two second frequencies each have the predefined frequency spacing ($\Delta f$), wherein signal components of the radio-frequency analogue transmission signal are generated on the basis of the periodic signals and the Fourier coefficients ($c_0$, $c_1$, ... $c_{N-1}$), wherein two signal components each have the predefined frequency spacing ($\Delta f$).

**Revendications**

**1.** Agencement de circuits (101) permettant de générer un signal d'émission analogique à haute fréquence (109), l'agencement de circuits présentant un dispositif de synthèse (105) pour générer le signal d'émission analogique à haute fréquence (109) à l'aide d'un spectre de fréquences discret d'un signal en bande de base numérique (103), **caractérisé en ce que** le dispositif de synthèse (105) est un dispositif pour l'exécution d'une transformation de Fourier inverse continue.

**2.** Moyen d'émission pour émettre un signal d'émission analogique à haute fréquence (109), le moyen d'émission (100) présentant une antenne (112) pour émettre le signal d'émission (109), le moyen d'émission (100) présentant un agencement de circuits (101) selon la revendication 1 pour générer le signal d'émission analogique à haute fréquence (109) à l'aide d'un spectre de fréquences discret d'un signal en bande de base numérique (103).

**3.** Moyen d'émission selon la revendication 2, dans lequel le spectre de fréquences discret présente plusieurs coefficients de Fourier ($c_0$, $c_1$, ... $c_{N-1}$) qui sont respectivement associés à une première fréquence dans une plage de bande de base, respectivement deux premières fréquences présentant un écartement de fréquences prédéfini (Δf).

4. Moyen d'émission selon l'une quelconque des revendications 2 ou 3, le moyen d'émission (100) présentant un dispositif d'analyse (104) pour calculer le spectre de fréquences discret à l'aide du signal en bande de base numérique (103) et qui est configuré sous la forme d'un dispositif pour l'exécution d'une transformation de Fourier discrète du signal en bande de base numérique (103).

5. Moyen d'émission selon l'une quelconque des revendications 2 à 3, dans lequel le moyen d'émission (100) présente un dispositif de modulation pour la génération d'un spectre de fréquences discret du signal en bande de base numérique (103) à l'aide d'un flux de données utiles numérique, non modulé.

6. Moyen d'émission selon l'une quelconque des revendications 2 à 5, dans lequel le dispositif de synthèse (105) présente plusieurs sources de signal (116) qui permettent de générer des signaux périodiques à des deuxièmes fréquences dans une plage de fréquence augmentée par rapport à la plage de bande de base, respectivement deux deuxièmes fréquences présentant l'écart de fréquences prédéfini (Δf).

7. Moyen d'émission selon la revendication 6, dans lequel le dispositif de synthèse (105) présente plusieurs moyens de pondération (117) qui permettent de régler la pondération des sources de signal (116) en fonction du spectre de fréquences discret de sorte que plusieurs composantes de signal du signal d'émission analogique à haute fréquence peuvent être générées, respectivement deux composantes de signal présentant l'écart de fréquences prédéfini (Δf).

8. Moyen d'émission selon la revendication 6, dans lequel la plage de fréquence augmentée est une plage de fréquence intermédiaire située entre la plage de bande de base et la plage des fréquences d'émission, et dans lequel le dispositif de synthèse (105) présente un étage mélangeur dans lequel les signaux périodiques à des deuxièmes fréquences peuvent être mélangés avec un signal d'oscillateur analogique, généré en fonction du spectre de fréquences discret, de sorte que plusieurs composantes de signal du signal d'émission analogique à haute fréquence peuvent être générées.

9. Moyen d'émission selon l'une quelconque des revendications 7 à 8, dans lequel les sources de signal (116) présentent un dispositif pour la synthèse numérique directe du signal périodique.

10. Utilisation d'un agencement de circuits (101) selon la revendication 1 pour générer un signal d'émission analogique à haute fréquence (109) dans une bande de fréquence d'émission au-dessus de 57 GHz.

11. Procédé permettant d'émettre un signal d'émission analogique à haute fréquence (109), comprenant les étapes de procédé suivantes consistant à :

    - fournir un spectre de fréquences discret d'un signal en bande de base numérique (103) ;
    - générer le signal d'émission analogique à haute fréquence (109) à l'aide du spectre de fréquences discret au moyen d'un dispositif pour l'exécution d'une transformation de Fourier inverse continue ; et
    - émettre le signal d'émission analogique à haute fréquence (109) par l'intermédiaire d'une antenne (112) .

12. Procédé selon la revendication 11, dans lequel, pour la fourniture du signal d'émission analogique à haute fréquence (109), l'étape de procédé mentionnée ci-après est exécutée :

    - calcul du spectre de fréquences discret du signal en bande de base numérique (103) à l'aide du signal en bande de base numérique (103) au moyen d'une transformation de Fourier discrète.

13. Procédé selon la revendication 12, dans lequel le calcul du spectre de fréquences discret du signal en bande de base numérique (103) est précédé d'un fenêtrage du signal en bande de base numérique (103).

14. Procédé selon la revendication 11, dans lequel, pour la fourniture du signal d'émission analogique à haute fréquence (109), l'étape de procédé mentionnée ci-après est exécutée :

    - génération du spectre de fréquences discret du signal en bande de base numérique (103) en partant d'un flux de données utiles non modulé.

**15.** Procédé selon l'une quelconque des revendications 11 à 14, dans lequel le spectre de fréquences discret présente plusieurs coefficients de Fourier ($c_0$, $c_1$, ... $c_{N-1}$) qui sont respectivement associés à une première fréquence dans une plage de bande de base, respectivement deux premières fréquences présentant un écartement de fréquences prédéfini ($\Delta f$), dans lequel des signaux périodiques à des deuxièmes fréquences sont générés dans une plage de fréquence augmentée par rapport à la plage de bande de base, respectivement deux deuxièmes fréquences présentant l'écartement de fréquences prédéfini ($\Delta f$), dans lequel les signaux périodiques et les coefficients de Fourier ($c_0$, $c_1$, ... $c_{N-1}$) permettent de générer des composantes de signal du signal d'émission analogique à haute fréquence, respectivement deux deuxièmes fréquences présentant l'écartement de fréquences prédéfini ($\Delta f$).

BB

D
A

PA

2 3 4 5 6 7 9 10 11 12
8

1

13

(Stand der Technik)

**Fig. 1**

**Fig. 2**

**Fig. 3**

**Fig. 4**

**Fig. 5**

Fig. 6

Fig. 7

155

154

Fensterung mit 50% Überlappung

Fig. 8a

158

FFT

157

FFT

105.2

FD-DAC

·FD-DAC

105.1

SUM

160

Fig. 8b

**Fig. 9**

155

Fensterung mit 50% Überlappung

154

Verschiebung

156

**Fig. 10a**

158

FFT

FFT

157

159

SUM

105

FD-DAC

**Fig. 10b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010104041 A1
- EP 2333994 A1
- US 2015043324 A1
- US 2011228878 A1
- US 20150303953 A1